# FASCICULE DE BREVET EUROPEEN

(11) **EP 3 202 696 B1**
(45) Date de publication et mention de la délivrance du brevet: **26.09.2018**
(21) Numéro de dépôt: 17154492.7
(22) Date de dépôt: 02.02.2017
(51) Int. Cl.: B65G 69/00

(54) **DISPOSITIF DE BUTOIR ESCAMOTABLE POUR QUAI DE CHARGEMENT ET/OU DECHARGEMENT DE VEHICULE**
VERSENKBARE ANSCHLAGVORRICHTUNG FÜR LADE- UND/ODER ENTLADERAMPE EINES FAHRZEUGS
RETRACTABLE STOPPER DEVICE FOR A VEHICLE LOADING AND/OR UNLOADING DOCK

(30) Priorité: 04.02.2016 FR 1650917
(43) Date de publication de la demande: 09.08.2017
(73) Titulaire: GPsystems, 69440 Taluyers (FR)
(72) Inventeur: MACQUET, Pierre, 87290 Saint-Sornin-Leulac (FR); VERGE, Jean-Paul, 87290 Saint-Sornin-Leulac (FR)
(74) Mandataire: Cabinet Chaillot

(56) Documents cités:
- EP-A1- 1 462 400
- EP-A1- 2 902 348
- US-A1- 2015 360 888
- US-B1- 6 497 076

## Description

La présente invention concerne le domaine des équipements de sécurité pour quai de chargement et/ou déchargement, et porte en particulier sur un dispositif de butoir escamotable.

Il est connu d'équiper un quai de chargement de butoirs. De tels butoirs sont destinés à amortir, pour protéger le véhicule, les chocs générés par l'arrière du véhicule lorsque celui-ci accoste le quai en reculant en direction de ce dernier.

On connaît des demandes de brevets européens EP 1 182 155 A2 et EP 2 832 670 A1 un dispositif de butoir escamotable qui comprend un châssis fixe et un butoir mobile. Le châssis fixe est monté sur la face avant du quai et le butoir mobile est déplaçable en translation entre une position escamotée dans le quai et une position déployée vers le haut et vers l'avant du quai. Le butoir est placé dans sa position déployée en l'absence de véhicule, pour servir de butée lors de l'accostage d'un véhicule. Une fois le véhicule immobilisé, il est alors rétracté de manière à ne pas gêner l'ouverture des portes du véhicule, voire le bon positionnement d'un niveleur de quai.

Le brevet US 6 497 076 B1 divulgue un dispositif de butoir escamotable selon le préambule de la revendication 1.

Le déplacement du butoir vers la position escamotée ou la position déployée peut être manuel ou être obtenu par un actionneur tel qu'un vérin ou un moteur, avec éventuellement des moyens de transformation du mouvement de sortie de l'actionneur en un mouvement de translation du butoir.

Dans certains cas de figure, le déplacement du butoir mobile entre les positions escamotée et déployée rencontre certaines difficultés, en particulier des difficultés pour ramener le butoir mobile en position escamotée lorsqu'un véhicule est encore en appui sur celui-ci, du fait d'un phénomène d'arc-boutement.

La présente invention vise à surmonter cet inconvénient en proposant un dispositif de butoir escamotable dont le déplacement est guidé, afin de ramener aisément le butoir mobile en position escamotée lorsqu'un camion est en appui dessus, et d'éviter en outre un phénomène d'arc-boutement.

La présente invention vise également à proposer un dispositif de butoir compact, solide et fiable permettant de protéger le véhicule lorsque celui-ci accoste le quai.

La présente invention a donc pour objet un dispositif de butoir escamotable pour un quai de chargement/déchargement de véhicule, lequel dispositif de butoir escamotable comprend :
- un châssis fixé ou destiné à être fixé au quai en regard de l'emplacement de chargement/déchargement devant le quai ;
- un butoir mobile comprenant un corps de butoir, par lequel le butoir mobile est relié au châssis, et une façade de butée reliée au corps de butoir et contre laquelle un véhicule est destiné à venir en appui, le butoir mobile étant relié au châssis de façon à être déplaçable en translation par rapport au châssis entre une position déployée, dans laquelle le butoir fait saillie du châssis, de telle sorte qu'en utilisation, la façade de butée du butoir fait saillie en avant et au-dessus du quai de façon à constituer une butée pour l'arrière d'un véhicule accostant le quai, et une position escamotée, dans laquelle le butoir a été ramené vers le châssis ;
- des moyens de guidage du butoir entre les positions escamotée et déployée ; et
- des moyens de commande du déplacement du butoir ;
les moyens de guidage du butoir mobile comprenant au moins une rainure de guidage ménagée dans l'un ou l'autre du châssis et du corps de butoir, et au moins un élément de roulement ou de glissement monté sur ou formé par au moins un axe de guidage solidaire de l'autre du châssis et du corps de butoir ou du châssis, l'au moins un élément de roulement ou de glissement étant apte à rouler ou glisser dans la au moins une rainure pour guider le mouvement de translation du corps de butoir par rapport au châssis, le dispositif de butoir étant caractérisé par le fait que l'au moins une rainure de guidage est ménagée selon une direction inclinée vers le bas et à l'opposé de la façade de butée, et par le fait qu'il comprend en outre un moyen d'absorption des chocs destiné à absorber au moins une partie de l'énergie d'impact d'un véhicule accostant le quai et venant en appui contre la façade de butée, le moyen d'absorption étant disposé entre la façade de butée et le corps de butoir.

Une telle combinaison de l'inclinaison des rainures latérales et de l'utilisation d'éléments aptes à rouler et/ou glisser, permet d'éviter un arc-boutement, permettant de ramener aisément le butoir mobile en position escamotée même si le véhicule est encore en appui.

L'utilisation d'éléments de glissement ou d'éléments de roulement montés ou formés fixes en rotation de manière à glisser dans la ou les rainures permet d'augmenter la solidité du dispositif lors d'un impact par rapport à l'utilisation d'éléments de roulement aptes à rouler dans la ou les rainures.

La présence du moyen d'absorption des chocs permet de limiter les efforts auxquels sont soumises les différentes pièces reliant le corps de butoir au châssis et améliorant donc la solidité et la fiabilité du dispositif de butoir.

De préférence, les moyens de guidage du butoir mobile comprennent au moins une paire de rainures de guidage latérales ménagées en regard l'une de l'autre dans le châssis, et au moins une paire correspondante d'éléments de roulement ou de glissement montés sur ou formés par au moins un axe de guidage.

De façon davantage préférée, les moyens de guidage du butoir mobile comprennent deux paires de rainures latérales espacées l'une de l'autre verticalement, et deux paires correspondantes d'éléments de roulement ou de glissement montées chacune sur ou formées chacune par un axe de guidage. Lesdites quatre rainures latérales permettent d'obtenir un dispositif de butoir plus compact dans la direction horizontale perpendiculaire au quai, pour une même hauteur du butoir mobile en position déployée.

Comme indiqué ci-dessus, le ou les éléments de roulement pourront être montés, ou formés, à rotation sur le ou les axes de guidage.

De préférence, les moyens de commande comprennent un vérin dont l'un de la tête et du corps est articulé en partie supérieure du châssis et l'autre de la tête et du corps est articulé en partie inférieure du corps de butoir.

Le moyen d'absorption peut être un tampon apte à absorber une partie de l'énergie d'un impact.

En variante, le moyen d'absorption peut être une lame ressort.

Avantageusement, le moyen d'absorption s'étend sensiblement sur la totalité de la longueur de la façade de butée.

De préférence, l'angle d'inclinaison de la ou des rainures par rapport à la verticale est compris entre 5 et 15 degrés.

La distance dans la direction verticale entre deux rainures latérales adjacentes est de 20 mm à 50 mm.

Pour mieux illustrer l'objet de la présente invention, on va en décrire ci-après des modes de réalisation particuliers avec référence aux dessins annexés.

Sur ces dessins :
- la Figure 1A est une vue en perspective d'un dispositif de butoir escamotable selon un premier mode de réalisation de la présente invention, installé sur un quai, en position escamotée ;
- la Figure 1B est une vue en coupe transversale selon le plan 1B-1B de la Figure 1A ;
- la Figure 1C est une vue en coupe transversale selon le plan 1C-1C de la Figure 1B ;
- la Figure 2A est une vue en perspective du dispositif de butoir escamotable de la Figure 1A, représenté en position déployée ;
- la Figure 2B est une vue en coupe transversale selon le plan 2B-2B de la Figure 2A ; et
- les Figures 3A et 3b sont des vues analogues aux Figures 1A et 1B, d'un dispositif de butoir escamotable selon un second mode de réalisation de la présente invention.

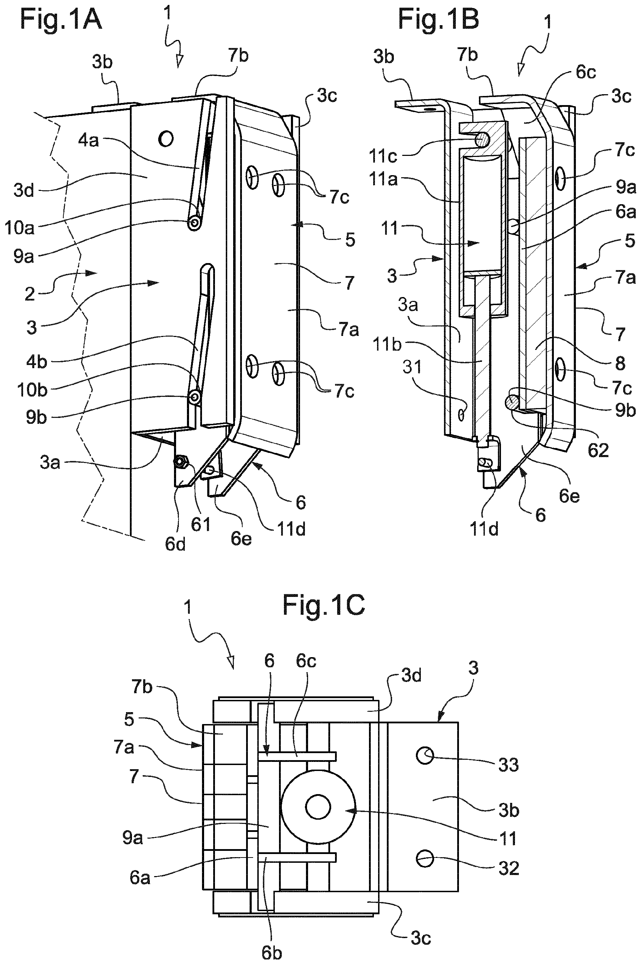

Si l'on se réfère aux Figures 1A à 2B, on peut voir que l'on a représenté un premier mode de réalisation d'un dispositif de butoir escamotable 1 équipant un quai 2 de chargement/déchargement de véhicule.

Le dispositif de butoir escamotable 1 comprend un châssis 3 configuré pour être fixé au quai 2, au niveau du nez de quai 2. En particulier, le châssis 3 comprend une plaque de fixation 3a avant sensiblement rectangulaire, une plaque de fixation supérieure 3b s'étendant à angle droit à partir du bord supérieur de la plaque de fixation avant 3a, et deux plaques latérales 3c, 3d sensiblement rectangulaires, s'étendant chacun à angle droit à partir de l'un des deux bords latéraux de la plaque de fixation avant 3a et à l'opposé de la plaque de fixation supérieure 3b. La plaque de fixation avant 3a est fixée à la paroi verticale du nez de quai par l'intermédiaire d'organes de fixation appropriés traversant au moins un trou traversant 31 prévu en partie inférieure de la plaque de fixation avant 3a. La plaque de fixation supérieure 3b est également fixée à la paroi horizontale du nez de quai par l'intermédiaire d'organes de fixation appropriés traversant au moins deux trous traversants 32, 33 prévus le long de la plaque de fixation supérieure 3b.

Les plaques de fixation avant 3a et supérieure 3b peuvent être réalisées à partir d'une tôle pliée.

Dans le premier mode de réalisation, les plaques latérales 3c, 3d comportent chacune deux rainures 4a, 4b, à savoir une rainure supérieure 4a et une rainure inférieure 4b. Les rainures supérieures 4a des plaques latérales 3c, 3d sont en regard l'une de l'autre. De même, les rainures inférieures 4b des plaques latérales 3c, 3d sont en regard l'une de l'autre. Chaque rainure supérieure 4a débouche sur le bord supérieur de la plaque latérale 3c, 3d, et chaque rainure inférieure 4b débouche sur le bord inférieur de la plaque latérale 3c, 3d. Les rainures supérieure 4a et inférieure 4b d'une même plaque latérale sont espacées l'une de l'autre verticalement. La distance dans la direction verticale entre deux rainures latérales 4a, 4b adjacentes est comprise entre 20 mm et 50 mm. Les rainures 4a, 4b présentent une inclinaison par rapport à la verticale, et sont orientées en diagonale vers le bas et vers le quai 2, c'est-à-dire à l'opposé de la zone d'accostage d'un véhicule. Ces rainures 4a, 4b sont réalisées au voisinage du bord côté zone d'accostage de véhicule de la plaque latérale 3c, 3d.

Cependant, une seule rainure pourrait être ménagée dans le châssis 3, par exemple, le long d'une plaque solidaire du châssis 3 et située à mi-distance entre les plaques latérales 3c, 3d et parallèlement à celles-ci. Ou encore, une seule paire de rainures pourrait être ménagée dans le châssis 3, en regard l'une de l'autre, le long des plaques latérales 3c, 3d. Le mode de réalisation dans lequel le châssis 3 comporte quatre rainures est toutefois préféré car il permet d'obtenir un dispositif plus stable et plus résistant sans augmenter les dimensions du dispositif. Dans encore un autre mode de réalisation, une ou plusieurs rainures pourraient être ménagées dans le corps de butoir 6.

Le dispositif de butoir escamotable 1 comprend également un butoir mobile 5.

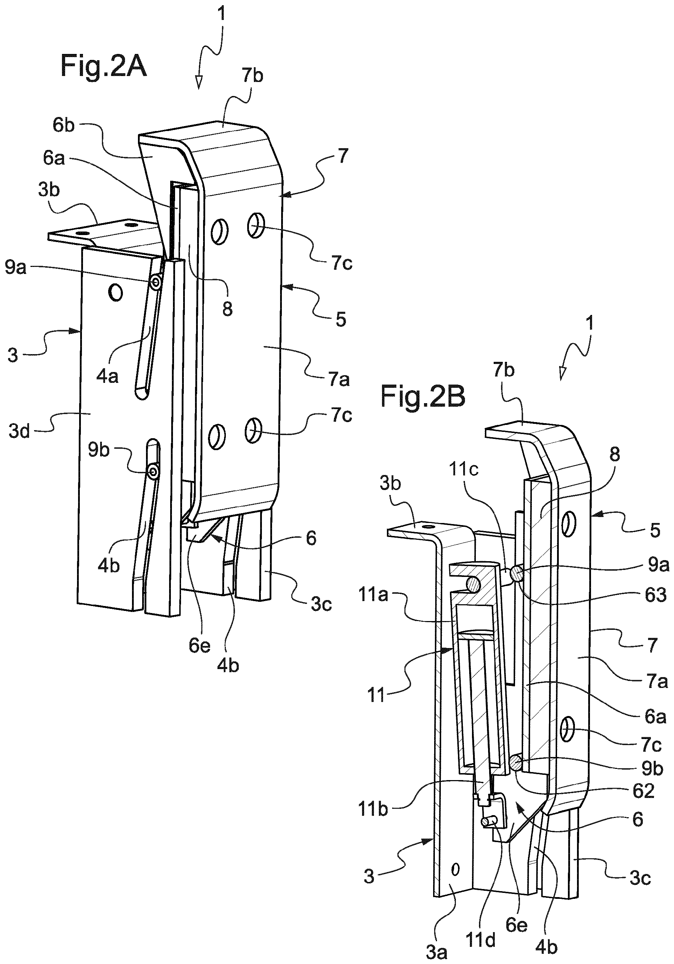

Comme on peut le voir sur les Figures, le butoir 5 est relié au châssis 3 de manière mobile et est apte à passer d'une position escamotée (Figures 1A à 1C) à une position déployée (Figures 2A et 2B). Dans sa position escamotée, le butoir 5 est sensiblement à la même hauteur que le châssis 3. Ainsi, lorsque le butoir 5 est escamoté, il est possible d'ouvrir les portes arrière du véhicule car le butoir 5 ne constitue plus un obstacle. Dans sa position déployée, le butoir 5 fait saillie au-dessus et devant le châssis 3. Ainsi, lorsque le butoir 5 est déployé, celui-ci constitue une butée pour l'arrière d'un véhicule qui accoste le quai 2.

Le butoir mobile 5 comprend un corps de butoir 6 rigide, une façade de butée 7 et un moyen d'absorption des chocs 8.

La façade de butée 7 est destinée à venir en appui contre un véhicule accostant le quai 2. Dans le mode de réalisation représenté, la façade de butée 7 a une forme sensiblement de L inversé, avec la branche longue 7a du L s'étendant sensiblement verticalement dans l'emplacement de chargement/déchargement et la branche courte 7b du L s'étendant en partie haute de la branche longue 7a et en direction du quai 2. La branche longue 7a de la façade de butée 7 a sensiblement les mêmes dimensions que la plaque de fixation avant 3a du châssis 3, et la branche courte 7b a sensiblement les mêmes dimensions que la plaque de fixation supérieure 3b du châssis 3. Ainsi, la branche longue 7a définit une façade sensiblement rectangulaire, dont les régions de bord supérieur et inférieur sont arrondies. Quatre trous traversants 7c sont pratiqués dans la façade, dont deux trous en partie haute et deux trous en partie basse.

La façade de butée 7 est reliée au corps 6 du butoir mobile 5. Le corps 6 de butoir comprend une plaque rectangulaire 6a rigide à partir de laquelle s'étendent deux ailes latérales 6b, 6c en partie haute, et deux plaques de support 6d, 6e portées par la plaque rigide 6a. Les ailes 6b, 6c occupent l'espace entre la branche courte 7b de la façade de butée 7 et la plaque rigide 6a du corps de butoir 6. La plaque rigide 6a est espacée de la façade 7a d'une certaine distance. Les plaques de support 6d, 6e s'étendent perpendiculairement à la plaque rigide 6a du corps de butoir 6 en direction du châssis 3, et sont positionnées de manière à faire saillie vers le bas de la plaque rigide 6a du corps de butoir 6. Les plaques de support 6d, 6e comportent des trous traversants 61, 62, 63, dont un premier trou 61 en partie basse, un deuxième trou 62 au voisinage de la région inférieure et un troisième trou 63 au voisinage de la région supérieure de chaque plaque 6d, 6e.

Le moyen d'absorption des chocs 8 est disposé dans l'espace prévu entre la façade de butée 7 et la plaque rigide 6a du corps de butoir 6. Ce moyen d'absorption 8 peut être un tampon en caoutchouc (tel que représenté) ou encore une lame ressort. Les dimensions du moyen d'absorption des chocs 8 sont sensiblement les mêmes que celles de la plaque rigide 6a du corps de butoir 6.

Le butoir mobile 5 est relié au châssis 3 par des moyens permettant le guidage en translation du butoir mobile 5 par rapport au châssis 3, sans risque d'arc-boutement.

En particulier, le butoir mobile 5 est relié au châssis 3 par l'intermédiaire de deux axes de guidage 9a, 9b, dont un axe supérieur 9a et un axe inférieur 9b. L'axe supérieur 9a traverse les trous traversants 63 en région supérieure des plaques de support 6d, 6e du corps de butoir 6 et est monté coulissant dans les rainures supérieures 4a du châssis 3. L'axe inférieur 9b traverse les trous traversants 62 en région inférieure des plaques de support 6d, 6e du corps de butoir 6 et est monté coulissant dans les rainures inférieures 4b du châssis 3. Deux éléments de roulement 10a, 10b, tels que des rouleaux ou des galets (appelés rouleaux par la suite) sont portés par chacun de ces axes de guidage 9a, 9b et montés à rotation autour de ceux-ci, de telle sorte que les rouleaux 10a, 10b peuvent rouler dans les rainures 4a, 4b correspondantes. Ainsi les deux rouleaux supérieurs 10a sont aptes à rouler dans les deux rainures supérieures 4a et les deux rouleaux inférieurs 10b sont aptes à rouler dans les deux rainures inférieures 4b. Il convient de noter que les rouleaux peuvent également être montés non rotatifs dans les rainures, de telle sorte que les rouleaux peuvent glisser dans lesdites rainures. Ce montage permet d'augmenter la solidité du dispositif à l'impact.

Le guidage en translation des axes de guidage 9a, 9b dans les rainures 4a, 4b et donc le roulement ou le glissement des rouleaux 10a, 10b dans celles-ci est commandé par un actionneur 11 relié entre le châssis 3 et le corps de butoir 6.

Dans le mode de réalisation représenté, l'actionneur est un vérin 11. Le corps 11a du vérin 11 est relié à pivotement d'axe horizontal, par exemple, aux plaques latérales 3c, 3d du châssis 3 par l'intermédiaire d'un pivot 11c s'étendant entre les deux plaques latérales 3c, 3d du châssis 3 et solidaires de celles-ci. La tige 11b du vérin 11 est alors reliée à pivotement d'axe horizontal aux plaques de support 6d, 6e du corps de butoir 6 par l'intermédiaire d'un axe 11d passant à travers les trous 61 situés en partie basse des plaques de support 6d, 6e.

On va maintenant décrire ci-après le fonctionnement du dispositif de butoir escamotable 1. Le butoir mobile 5 est placé en position déployée avant l'accostage d'un véhicule, puis une fois le véhicule accosté, le butoir mobile 5 est déplacé vers la position escamotée tandis que le véhicule vient en appui contre la façade de butée 7 du butoir 5.

En position déployée (Figures 2A, 2B), le butoir mobile 5 est maintenu en position haute par la pression exercée par la tige 11b rétractée du vérin 11. L'axe de guidage supérieur 9a est positionné au niveau de l'extrémité haute des rainures supérieures 4a et l'axe de guidage inférieur 9b est positionné au niveau de l'extrémité haute des rainures inférieures 4b. La façade de butée 7 est alors positionnée à l'avant du châssis 3 et fait saillie au-dessus de celui-ci.

Lorsqu'un véhicule vient en appui contre la façade de butée 7, l'effort exercé par le véhicule est alors repris au moins en partie par le moyen d'absorption des chocs 8.

Le déploiement de la tige 11b du vérin 11 conduit au roulement ou au glissement des rouleaux 10a, 10b dans les rainures 4a, 4b respectives, conduisant au déplacement en translation des axes de guidage 9a, 9b vis-à-vis des rainures 4a, 4b, entraînant alors un déplacement en translation vers le bas du butoir mobile 5. En raison de l'orientation des rainures 4a, 4b, les axes de guidage 9a, 9b sont déplacés vers le bas et vers l'arrière, soit à l'opposé du véhicule accosté, avec un roulement ou glissement des rouleaux 10a, 10b, ce qui permet d'éviter le phénomène d'arc-boutement. Ainsi, les axes 9a, 9b et leurs rouleaux 10a, 10b ne se coincent pas et le butoir mobile 5 peut être escamoté aisément même lorsque le véhicule est en appui contre le butoir 5.

En position escamotée, comme représenté sur les Figures 1A à 1C, on peut voir que le butoir 5 est positionné à la même hauteur que le châssis 3, en particulier, la plaque sensiblement horizontale 7b de la façade de butée 7 est dans l'alignement de la plaque de fixation supérieure 3b du châssis 3. Ainsi, le passage pour les portes arrière d'un véhicule est dégagé. Dans cette configuration, l'axe de guidage supérieur 9a est positionné au niveau de l'extrémité basse des rainures supérieures 4a et l'axe de guidage inférieur 9b est positionné au niveau de la région d'extrémité basse des rainures inférieures 4b.

Ainsi, la combinaison d'un moyen d'absorption des chocs 8 et d'un guidage en translation du butoir mobile 5 par l'intermédiaire d'au moins un rouleau 10a, 10b apte à rouler ou glisser dans une rainure 4a, 4b inclinée à l'opposé de la façade de butée 7, permet à la fois d'encaisser les chocs et d'escamoter aisément le butoir 5 quel que soit le cas de figure, c'est-à-dire même avec un véhicule en appui contre le butoir 5. Ainsi, la solidité et la fiabilité du dispositif de butoir 1 est améliorée.

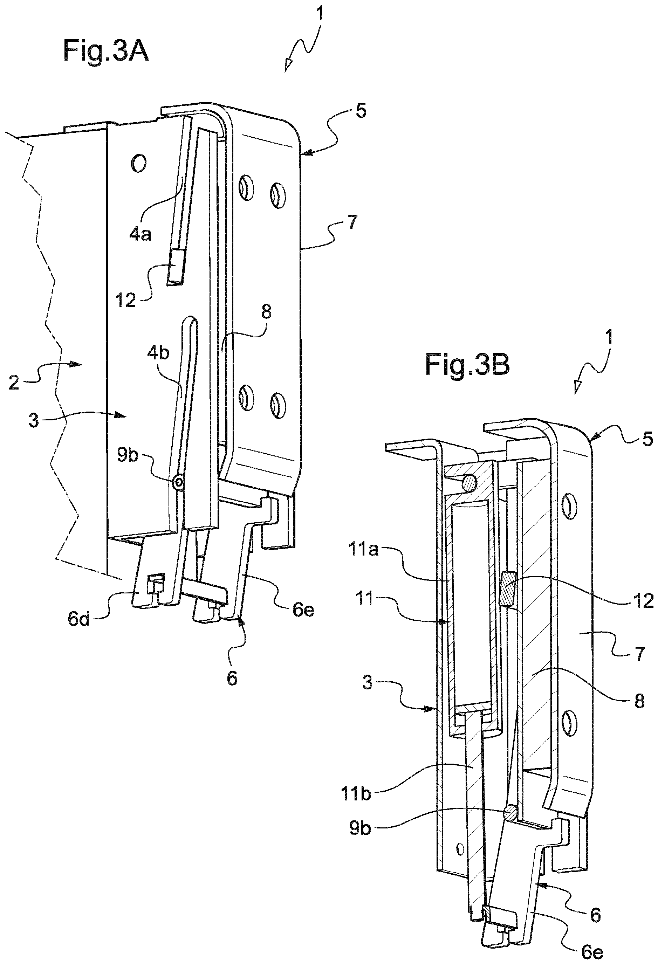

Comme indiqué ci-dessus, les axes 9a, 9b peuvent porter des rouleaux non montés rotatifs, qui alors glisseront dans les rainures 4a, 4b. Si l'on se réfère maintenant aux Figures 3A et 3B, on peut voir que l'on y a représenté un second mode de réalisation du dispositif de butoir selon la présente invention, dans lequel les rouleaux de l'axe supérieur 9a sont remplacés par des éléments de glissement.

Dans la description suivante de ce second mode de réalisation, on utilisera les mêmes chiffres de référence que précédemment pour désigner les parties identiques avec le premier mode de réalisation.

Le dispositif de butoir 1 selon le second mode de réalisation diffère du premier mode principalement en ce que l'axe supérieur 9a, se présentant sous la forme d'une tige cylindrique, est remplacé par un axe de guidage 12 de section transversale rectangulaire s'étendant à travers des trous de forme complémentaire ménagés dans les plaques de support 6e, 6d du corps de butoir 6 et au niveau desquels l'axe de guidage 12 est rendu solidaire du corps de butoir 6.

L'axe de guidage 12 est orienté de telle sorte qu'en vue de côté, le côté long de la section rectangulaire est parallèle à la direction des rainures supérieures 4a, la largeur de ces dernières étant légèrement supérieure à l'épaisseur de l'axe de guidage 12 de façon à permettre à ce dernier de glisser librement dans les rainures 4a. Les deux régions d'extrémité de l'axe de guidage 12 forment ainsi des éléments de glissement dans les rainures supérieures 4a.

Dans l'exemple représenté sur les Figures 3A et 3B, l'axe de guidage 12 de section transversale rectangulaire est utilisé conjointement avec l'axe de guidage inférieur 9b portant des rouleaux montés rotatifs ou non. Bien entendu, l'axe de guidage inférieur 9b pourrait être remplacé par un axe identique à l'axe 12, à savoir de section transversale rectangulaire.

Le fonctionnement et les avantages procurés par le dispositif de blocage selon le second mode de réalisation sont identiques à celui du premier mode, à savoir que le choc d'un véhicule entrant en contact avec le butoir mobile 5 est absorbé en partie par le moyen d'absorption 8, améliorant la solidité et la fiabilité du dispositif de butoir, tout en permettant un escamotable fiable du butoir mobile 5 du fait que l'on évite tout blocage de ce dernier, notamment par arc-boutement, lorsqu'un véhicule appuie sur le butoir mobile 5.

## Revendications

1. Dispositif de butoir escamotable (1) pour un quai de chargement/déchargement (2) de véhicule, lequel dispositif de butoir (1) escamotable comprend :
- un châssis (3) fixé ou destiné à être fixé au quai (2) en regard de l'emplacement de chargement/déchargement devant le quai (2) ;
- un butoir (5) mobile comprenant un corps de butoir (6), par lequel le butoir (5) est relié au châssis (3), et une façade de butée (7) reliée au corps de butoir (6) et contre laquelle un véhicule est destiné à venir en appui, le butoir (5) étant relié au châssis (3) de façon à être déplaçable en translation par rapport au châssis (3) entre une position déployée, dans laquelle le butoir (5) fait saillie du châssis (3), de telle sorte qu'en utilisation, la façade de butée (7) du butoir (5) fait saillie en avant et au-dessus du quai (2) de façon à constituer une butée pour l'arrière d'un véhicule accostant le quai (2), et une position escamotée, dans laquelle le butoir (5) a été ramené vers le châssis (3) ;
- des moyens de guidage du butoir (5) entre les positions escamotée et déployée ; et
- des moyens de commande du déplacement du butoir (5) ; les moyens de guidage du butoir mobile (5) comprenant au moins une rainure de guidage (4a, 4b) ménagée dans l'un ou l'autre du châssis (3) et du corps de butoir (6), et au moins un élément de roulement ou de glissement (10a, 10b) monté sur ou formé par au moins un axe de guidage (9a ; 9b ; 12) solidaire de l'autre du châssis (3) et du corps de butoir (6), l'au moins un élément de roulement ou de glissement (10a, 10b) étant apte à rouler ou glisser dans ladite au moins une rainure (4a, 4b) pour guider le mouvement de translation du corps de butoir (6) par rapport au châssis (3),
le dispositif de butoir (1) étant **caractérisé par le fait que** l'au moins une rainure de guidage (4a, 4b) est ménagée selon une direction inclinée vers le bas et à l'opposé de la façade de butée (7), et **par le fait qu'**il comprend en outre un moyen d'absorption des chocs (8) destiné à absorber au moins une partie de l'énergie d'impact d'un véhicule accostant le quai (2) et venant en appui contre la façade de butée (7), le moyen d'absorption (8) étant disposé entre la façade de butée (7) et le corps de butoir (6) .

2. Dispositif de butoir escamotable (1) selon la revendication 1, **caractérisé par le fait que** les moyens de guidage du butoir mobile (5) comprennent au moins une paire de rainures de guidage (4a, 4b) latérales ménagées en regard l'une de l'autre dans le châssis (3), et au moins une paire correspondante d'éléments de roulement ou de glissement (10a, 10b) montés sur ou formés par au moins un axe de guidage (9a, 9b ; 12).

3. Dispositif de butoir escamotable (1) selon la revendication 1 ou la revendication 2, **caractérisé par le fait que** les moyens de guidage du butoir mobile (5) comprennent deux paires de rainures latérales (4a, 4b) espacées l'une de l'autre verticalement, et deux paires correspondantes d'éléments de roulement ou de glissement (10a, 10b) montées chacune sur ou formées chacune par un axe de guidage (9a, 9b ; 12).

4. Dispositif de butoir escamotable (1) selon l'une des revendications 1 à 3, **caractérisé par le fait que** les moyens de commande comprennent un vérin (11) dont l'un de la tête (11b) et du corps (11a) est articulé en partie supérieure du châssis (3) et l'autre de la tête (11b) et du corps (11a) est articulé en partie inférieure du corps de butoir (6) .

5. Dispositif de butoir escamotable (1) selon l'une des revendications 1 à 4, **caractérisé par le fait que** le moyen d'absorption (8) est un tampon apte à absorber une partie de l'énergie d'un impact.

6. Dispositif de butoir escamotable (1) selon l'une des revendications 1 à 4, **caractérisé par le fait que** le moyen d'absorption (8) est une lame ressort.

7. Dispositif de butoir escamotable (1) selon l'une des revendications 1 à 6, **caractérisé par le fait que** le moyen d'absorption (8) s'étend sensiblement sur la totalité de la longueur de la façade de butée (7).

8. Dispositif de butoir escamotable (1) selon l'une des revendications 1 à 7, **caractérisé par le fait que** l'angle d'inclinaison de la ou des rainures par rapport à la verticale est compris entre 5 et 15 degrés.

## Patentansprüche

1. Versenkbare Anschlagvorrichtung (1) für eine Lade-/Entladerampe (2) eines Fahrzeugs, wobei die Anschlagvorrichtung (1) umfasst:
- ein ortsfestes Chassis (3) bzw. ein Chassis, das gegenüber dem Lade-/Entladeplatz vor der Rampe (2) auf der Rampe (2) zu befestigen ist,
- einen beweglichen Anschlag (5), umfassend einen Anschlagkörper (6), durch den der Anschlag (5) mit dem Chassis (3) verbunden ist, und eine mit dem Anschlagkörper (6) verbundene Anschlagfläche (7), auf der ein Fahrzeug anliegen soll, wobei der Anschlag (5) mit dem Chassis (3) derart verbunden ist, dass er relativ zum Chassis (3) verschiebbar ist zwischen einer ausgefahrenen Stellung, in der der Anschlag (5) vom Chassis (3) herausragt, sodass im Verwendungsfall die Anschlagfläche (7) des Anschlags (5) über die Rampe (2) nach vorn derart herausragt, dass sie einen Anschlag für das Heck eines sich an die Rampe (2) anlegenden Fahrzeugs darstellt, und einer versenkten Stellung, in der der Anschlag (5) zum Chassis zurückgefahren (3) ist;
- Mittel zur Führung des Anschlags (5) zwischen der versenkten und ausgefahrenen Stellung und
- Mittel zur Steuerung der Bewegung des Anschlags (5); wobei die Führungsmittel des beweglichen Anschlags (5) mindestens eine entweder im Chassis (3) oder im Anschlagkörper (6) angeordnete Führungsnut (4a, 4b) sowie mindestens einen auf mindestens einem mit dem jeweils anderen des Chassis (3) und des Anschlagkörpers (6) verbundenen Führungsstift (9a; 9b; 12) montierten oder dadurch ausgebildeten Walz- oder Gleitkörper (10a, 10b) umfasst, wobei der mindestens eine Walz- oder Gleitkörper (10a, 10b) zum Wälzen oder Gleiten in mindestens einer Nut (4a, 4b) geeignet ist, um die Verschiebung des Anschlagkörpers (6) relativ zum Chassis (3) zu führen,
wobei die Anschlagvorrichtung (1) **dadurch gekennzeichnet ist, dass** die mindestens eine Führungsnut (4a, 4b) schräg nach unten verläuft und der Anschlagfläche (7) gegenüberliegt, und dass sie ferner einen Stoßdämpfer (8) zum Aufnehmen mindestens eines Teils der Aufprallenergie eines sich an die Rampe (2) anschließenden und auf die Anschlagfläche (7) anlegenden Fahrzeugs umfasst, wobei der Stoßdämpfer (8) zwischen der Anschlagfläche (7) und dem Anschlagkörper (6) angeordnet ist.

2. Versenkbare Anschlagvorrichtung (1) nach Anspruch 1, **dadurch gekennzeichnet, dass** die Führungsmittel des beweglichen Anschlags (5) mindestens ein Paar seitliche Führungsnuten (4a, 4b), die einander gegenüberliegend im Chassis (3) angeordnet sind, und mindestens ein entsprechendes Gleit- bzw. Walzkörperpaar (10a, 10b), das auf mindestens einem Führungsstift (9a, 9b; 12) montiert bzw. daraus ausgebildet ist, umfassen.

3. Versenkbare Anschlagvorrichtung (1) nach Anspruch 1 oder Anspruch 2, **dadurch gekennzeichnet, dass** die Führungsmittel des beweglichen Anschlags (5) zwei vertikal voneinander beabstandete seitliche Nutenpaare (4a, 4b) und zwei entsprechende Walz- oder Gleitkörperpaare (10, 10b), die jeweils auf einem Führungsstift (9a, 9b; 12) montiert oder daraus ausgebildet sind, umfassen.

4. Versenkbare Anschlagvorrichtung (1) nach einem der Ansprüche 1 - 3, **dadurch gekennzeichnet, dass** die Steuerungsmittel einen Heber (11) umfassen, wobei dessen Kopf (11b) oder Körper (11a) mit dem oberen Teil des Chassis (3) gelenkig verbunden ist und der jeweils andere Teil, d.h. Kopf (11b) oder Körper (11a), mit dem unteren Teil des Anschlagkörpers (6) gelenkig verbunden ist.

5. Versenkbare Anschlagvorrichtung (1) nach einem der Ansprüche 1 - 4, **dadurch gekennzeichnet, dass** es sich bei dem Stoßdämpfer (8) um einen Puffer handelt, der zur Aufnahme eines Teils der Energie eines Aufpralls geeignet ist.

6. Versenkbare Anschlagvorrichtung (1) nach einem der Ansprüche 1 - 4, **dadurch gekennzeichnet, dass** es sich bei dem Stoßdämpfer (8) um ein Federblatt handelt.

7. Versenkbare Anschlagvorrichtung (1) nach einem der Ansprüche 1 - 6, **dadurch gekennzeichnet, dass** sich der Stoßdämpfer (8) im Wesentlichen über die ganze Länge der Anschlagfläche (7) erstreckt.

8. Versenkbare Anschlagvorrichtung (1) nach einem der Ansprüche 1 - 7, **dadurch gekennzeichnet, dass** der Neigungswinkel der mindestens einen Nut relativ zur Vertikalen zwischen 5 und 15 Grad liegt.

## Claims

1. A retractable stopper device (1) for a vehicle loading/unloading dock (2), said retractable stopper device (1) comprising:
- a frame (3) attached or intended to be attached to the dock (2) facing the loading/unloading location in front of the dock (2);
- a movable stopper (5) comprising a stopper body (6), with which the stopper (5) is connected to the frame (3), and a stop face (7) connected to the stopper body (6) and against which a vehicle is intended to abut, the stopper (5) being connected to the frame (3) so as to be able to translate with respect to the frame (3) between a deployed position, in which the stopper (5) protrudes from the frame (3) such that, in use, the stop face (7) of the stopper (5) protrudes forwards and above the dock (2) so as to constitute a stop for the rear of a vehicle berthing the dock (2), and a retracted position, in which the stopper (5) has been retracted towards the frame (3);
- means for guiding the stopper (5) between the retracted and deployed positions; and
- means for controlling the movement of the stopper (5); the means for guiding the movable stopper (5) comprising at least one guiding groove (4a, 4b) provided in either of the frame (3) and the stopper body (6), and at least one rolling or sliding member (10a, 10b) mounted on or formed by at least one guiding shaft (9a; 9b; 12) integral with the other of the frame (3) and the stopper body (6), the at least one rolling or sliding member (10a, 10b) being able to roll or slide within said at least one groove (4a, 4b) to guide the translation movement of the stopper body (6) with respect to the frame (3),
the stopper device (1) being **characterised in that** the at least one guiding groove (4a, 4b) is provided along a direction inclined downwards and away from the stop face (7), and **in that** it further comprises impact absorbing means (8) intended to absorb at least one part of the impact energy of a vehicle berthing the dock (2) and abutting against the stop face (7), the absorbing means (8) being disposed between the stop face (7) and the stopper body (6).

2. The retractable stopper device (1) according to claim 1, **characterised in that** the means for guiding the movable stopper (5) comprise at least one pair of lateral guiding grooves (4a, 4b) provided so as to face each other in the frame (3), and at least one corresponding pair of rolling or sliding members (10a, 10b) mounted on or formed by at least one guiding shaft (9a, 9b; 12).

3. The retractable stopper device (1) according to claim 1 or claim 2, **characterised in that** the means for guiding the movable stopper (5) comprise two pairs of lateral grooves (4a, 4b) vertically spaced from each other, and two corresponding pairs of rolling or sliding members (10a, 10b) each mounted on or formed by a guiding shaft (9a, 9b; 12).

4. The retractable stopper device (1) according to one of claims 1 to 3, **characterised in that** the controlling means comprise a cylinder (11), with one of the head (11b) and the body (11a) thereof being hinged at the upper part of the frame (3) and the other of the head (11b) and the body (11a) thereof being hinged at the lower part of the stopper body (6).

5. The retractable stopper device (1) according to one of claims 1 to 4, **characterised in that** the absorbing means (8) is a buffer able to absorb part of the energy of an impact.

6. The retractable stopper device (1) according to one of claims 1 to 4, **characterised in that** the absorbing means (8) is a spring leaf.

7. The retractable stopper device (1) according to one of claims 1 to 6, **characterised in that** the absorbing means (8) substantially extends on the entire length of the stop face (7).

8. The retractable stopper device (1) according to one of claims 1 to 7, **characterised in that** the inclination angle of the one or more grooves with respect to the vertical is between 5 and 15 degrees.
